# EUROPEAN PATENT SPECIFICATION

(11) **EP 2 646 233 B1**
(45) Date of publication and mention of the grant of the patent: **06.04.2016**
(21) Application number: 11815560.5
(22) Date of filing: 28.11.2011
(51) Int. Cl.: B29D 30/58, B29D 30/62

(54) **PROCESS AND PLANT FOR BUILDING TYRES, GREEN TYRE AND CURED TYRE OBTAINED THEREBY.**
VERFAHREN UND ANLAGE ZUR HERSTELLUNG VON REIFEN, REIFENROHLING UND DAMIT HERGESTELLTER GEHÄRTETER REIFEN
PROCÉDÉ ET INSTALLATION POUR CONSTRUIRE DES PNEUS, PNEU CRU ET PNEU VULCANISÉ OBTENU SELON LE PROCÉDÉ

(30) Priority: 29.11.2010 IT MI20102208; 29.11.2010 US 417636 P
(43) Date of publication of application: 09.10.2013
(73) Proprietor: Pirelli Tyre S.p.A., 20126 Milano (IT)
(72) Inventor: SIMONATO, Giovanni, I-20126 Milano (IT); MANCINI, Gianni, I-20126 Milano (IT); D'ORIA, Francesco, I-20126 Milano (IT)
(74) Representative: Checcacci, Giorgio
(86) International application number: PCT/IB2011/002887
(87) International publication number: WO 2012/073100

(56) References cited:
- EP-A1- 0 485 127
- DE-A1- 3 541 126
- US-A- 3 607 557
- US-A- 3 907 019

## Description

The present invention relates to a process and a plant for building tyres for vehicle wheels. In particular, the present invention relates to a process and a plant for building tyres for racing or high performance vehicle. The present invention also relates to a green tyre and a tyre obtained with said building process.

Tyre production cycles envisage a building process, wherein the various components of the tyre itself are made and/or assembled in one or more building lines, followed by a moulding and vulcanization process, in a suitable vulcanization line, adapted for defining the tyre structure according to a desired geometry and tread pattern.

A tyre generally comprises a toroidally ring-shaped carcass structure including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim.

Placed on the carcass is a crown structure formed by a reinforcing structure, generally known as belt structure, whereon a band of elastomeric material, called tread band, is applied, within which, at the end of the moulding and vulcanization steps, a raised pattern is formed for ground contact. The tread band is formed by a segment closed up on itself the two free ends whereof are made integral to one another by a joint. The belt structure usually comprises, in the case of tyres for cars, at least two radially overlapped strips of rubber fabric provided with reinforcing cords, usually of metal, arranged parallel to each other in each strip and crossed with the cords of the adjacent strip, preferably symmetrical to the equatorial plane of the tyre. Preferably, the belt structure further comprises in radially outer position, at least on the ends of the underlying belt strips, also a third layer of textile or metal cords, arranged circumferentially (at 0 degrees).

Finally, in tyres of the tubeless type, a radially inner layer, called liner, is present which has imperviousness features for ensuring the air-tightness of the tyre itself.

To the aims of the present invention and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

In the present description and following claims, the terms "radial" and "axial" and the expressions "radially inner/outer" are used with reference to the radial direction and to the axial direction of a forming support, that is, of a tyre mounted on a wheel. The terms "circumferential" and "circumferentially" are used in the direction of the extension of the tyre periphery, that is, the direction of rotation thereof, both in use and in the forming processes.

To the aims of the present scope, by the term "green tyre" it is meant a tyre obtained by the building process and not yet vulcanized.

For the deposition of the tread band, normally, segments of elastomeric material with even composition and suitable length (corresponding to the extension for a complete revolution on the belt structure) are arranged on special devices, wherefrom they are picked up for the application on the belt structure.

EP 0485127 A1 discloses a process and apparatus for manufacturing an unvulcanized rubber structure. The apparatus comprises a continuous mixer-extruder, calender rolls, cooling drums and a green tyre assembly machine, sequentially disposed in the direction of supply of the rubber. Cutter is provided at the calender rolls, to determine the width of the tread rubber sheet. At the green tyre assembling machine, the tread rubber sheet is wrapped around a shaping drum and caused to adhere thereto. The wrapped length of a sheet can be adjusted by changing the number of revolutions.

US 3,907,019 discloses manufacturing of a tire by forming it progressively by winding a sheet of rubber onto a carcass. The sheet passes over drive rolls at a constant linear speed V₀ which is substantially less than the circumferential speed V₁ of the carcass, so that the sheet experiences an imposed elongation. When the quantity of sheet necessary to form the tread is wound, the speed of the carcass is further increased for a short time, in order to produce an additional permanent elongation; the sheet can then be cut.

US 3,607,557 discloses another machine for manufacturing a tire in which a tread is formed by winding a rubber sheet onto a carcass. The rubber sheet is cut by a transverse knife adapted to cooperate with the surface of the conveyor belt that carries the rubber sheet.

Document EP 1398182 describes tread bands with a so-called "cap and base" (tread and underlayer) structure, wherein the tread provides the running surface of the tread band whereas the underlayer offers a transition zone between the tread and the belt structure of the tyre. The different layers have differentiated mechanical properties and elastomeric compositions. In the embodiment, a shaped component of non vulcanized rubber is arranged with conventional means (for example extrusion).

Document EP 0105822 shows a tyre, in particular for earth moving vehicles, wherein the tread band comprises at least one inner layer with good heat resistance properties and at least one outer layer with good wear, cut and tear resistance properties. For the deposition, the compositions of the layers are combined and calendered in a single sheet, prior to the application to the carcass.

Document WO 2004/096583 describes a tyre with a tread band that includes at least one radially inner layer and one radially outer layer having different compression elasticity modulus; the radially inner layer comprises a plurality of circumferential abutment elements extended radially in the radially outer layer and axially distributed along the cross development of the tread band. Each of the two layers is formed by an elongated element laid forming a plurality of windings axially side by side and/or radially overlapped for forming the circumferential abutment elements.

Document GB 1372254 describes a tread band with layered structure, formed by the overlapping of a finite number of segments of sheet material or by the spiral winding of a single segment; the sheet material is picked up from a feeding roll where it is stored wound interleaved with a polyethylene sheet or foil. Before being subject to vulcanization, the tread band is formed by a large number of overlapped layers.

The Applicant has checked that the discontinuity unavoidably introduced in the tread band by the joint may sometimes cause problems, especially in high performance or racing vehicles.

The Applicant has therefore perceived that it would be advantageous to eliminate the same joint or at least reduce the extent of the discontinuity present on the tread band.

The Applicant has thus understood that it is possible to reduce the impact of the joint on the tyre performance, reducing the dimensions thereof and in particular the thickness.

The Applicant has then found that making the tread band with a plurality of layers, suitably hot-deposited, it is possible to minimise the discontinuities introduced in the tread band by the need of closing the same tread band on itself.

More in particular, in accordance with a first aspect thereof, the invention relates to a process for building tyres according to claim 1.

The Applicant believes that with this process it is possible to minimise the discontinuities introduced in the tread band. In fact, due to the reduced thickness of each layer, it is possible to prevent joints of such dimensions as to introduce considerable discontinuities.

More in particular, in accordance with a second aspect thereof, the invention relates to a green tyre according to claim 16.

In accordance with a third aspect thereof, the invention relates in particular to a tyre according to the second aspect of the invention, moulded and vulcanized.

The Applicant believes that the discontinuities introduced in the tread band are minimised in this tyre.

More in particular, in accordance with a fourth aspect thereof, the invention relates to a plant for building a tyre, according to claim 22.

The Applicant believes that since this plant implements a process according to the first aspect of the invention, it allows minimising the discontinuities in the tread band of the manufactured tyres.

The present invention, in accordance with one of said aspects, may exhibit one or more of the preferred features described hereinafter. Preferred embodiments of the invention are defined in the dependent claims. According to a preferred embodiment, there is provided a guide of said band of elastomeric material towards said belt structure.

In another preferred embodiment, it is also provided for the deposition of the extruded band to take place directly, without the interposition of any guiding means.

A preferred embodiment comprises a guiding of said band of elastomeric material towards said belt structure, wherein the cut takes place during the guiding.

Even more preferably, the cut takes place before the deposition starts and the guiding comprises an acceleration of the band downstream of the cut, after cutting. Advantageously, this implies that the band is deposited on the belt structure at a higher speed than the speed at which it is extruded, thus subjecting the band to a certain longitudinal traction that improves the adhesion thereof to the belt structure.

According to a preferred embodiment, during the guide it is comprised:
- further cut of said band in a predetermined position, with separation from the band of a waste portion of predetermined length,
- discard of the waste portion.

Preferably, the guiding comprises:
- temporary arrangement of the band on a transfer device, so as to carry out the deposition on said belt structure in a position relatively remote from said extrusion device.

Preferably, the thickness of the band is comprised between 0.8 and 1.5 mm. More preferably, said thickness of the band is equal to about 1.0 mm. According to a preferred embodiment, said at least two layers of the band of elastomeric material have all the same length. Advantageously, the building is thus simplified.

According to a preferred embodiment, the band is deposited wound at least twice around, with formation of said at least two overlapping layers. Advantageously, the tread band is thus free from joints.

Even more preferably, there is provided a rolling of the deposited band, to level off, with heat, an end part of the deposited band. Advantageously, the step at the end part of the deposited band is thus chamfered and moulding and vulcanization are thus simplified.

Preferably, said band is deposited in single revolutions, on top of one another with formation of at least two overlapping layers, each of said layers having its own joint formed therein.

Even more preferably, said deposition is carried out so that the joints of the distinct single layers are in distinct angular positions, angularly distributed along the circumferential direction of a tyre being processed.

According to another preferred embodiment, the band deposition provides for:
- first deposition of a first portion of said band on said belt structure for a first revolution, with formation of a first of said at least two overlapping layers, and formation of a first joint between a final edge and an initial edge of the first portion,
- second deposition of a second portion of said band on the first layer for a second revolution, with formation of a second of said at least two overlapping layers, and formation of a second joint between a final edge and an initial edge of the second portion,
- optionally, one or more further depositions of further portions of said band of the last layer previously deposited for further revolutions, with formation of further overlapping layers, and formation of a further joint between a final edge and an initial edge of each further portion.

Advantageously, the tread band thus obtained has multiple joints, which have reduced dimensions and are regularly distributed in circumferential direction. As a consequence, the structure of the tread band is substantially free from the problems due to the discontinuity of a single large sized joint.

Even more preferably, at least two between said first portion, said second portion, said optional further portions are made with a band of a different elastomeric material. Advantageously, it is thus possible to differentiate the features of the tread band in radial direction, for example for obtaining differentiated performance during the useful life of the tyre, or for imparting specific properties to specific radial zones of the tread band.

According to a preferred embodiment, said at least two layers of the band of elastomeric material have different widths to one another, decreasing in the radial direction, from the inside outwards.

According to a different preferred embodiment, said at least two overlapping layers are formed by a deposited band wound at least twice around.

According to another preferred embodiment, said at least two overlapping layers are formed by corresponding band portions, deposited one onto the other and each closed by a joint.

Preferably, the joints are in distinct angular positions, angularly distributed along the circumferential direction of the tyre.

Even more preferably, said two band portions are made from different elastomeric material.

Preferably, a transfer device is provided to support and transport the hot-extruded band from the extruder device to the crown structure.

Even more preferably, the transfer device comprises its own motorised devices, to accelerate the supported band.

Further features and advantages of invention will appear more clearly from the Further features and advantages of invention will appear more clearly from the following description of some preferred examples of processes, green tyres, tyres and plants according to the invention, made by way of an indicative nonlimiting example with reference to the annexed drawings, wherein:
- fig. 1 is a schematic partly cross-sectional view of a tyre according to a first embodiment of the invention;
- fig. 2 is a schematic cross-sectional view of the tread band of the tyre of fig. 1 according to a plane perpendicular to the tyre axis;
- fig. 3 is a schematic cross-sectional view of the tread band of the tyre of fig. 1 according to a radial plane, passing by the tyre axis;
- fig. 4 is a schematic cross-sectional view of a variant of embodiment of the tread band of the tyre of fig. 1 according to a radial plane, passing by the tyre axis;
- fig. 5 is a schematic partly cross-sectional view of a tyre according to a second embodiment of the invention;
- fig. 6 is a schematic cross-sectional view of the tread band of the tyre of fig. 5 according to a plane perpendicular to the tyre axis;
- fig. 7 is a schematic cross-sectional view of the tread band of the tyre of fig. 5 according to a radial plane, passing by the tyre axis;
- fig. 8 is a schematic cross-sectional view of a variant of embodiment of the tread band of the tyre of fig. 5 according to a radial plane, passing by the tyre axis;
- fig. 9 is a functional diagram of a plant for building a tyre according to the invention;
- fig. 10 is a schematic view of a workstation of the plant of fig. 9;
- fig. 11 is an enlarged scale view of a portion of the workstation of fig. 10.

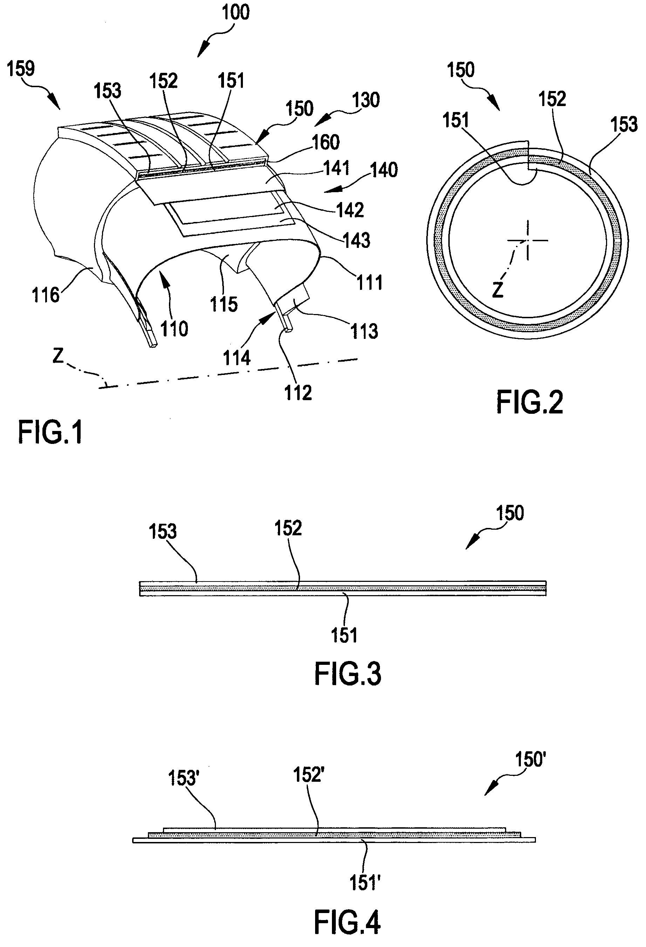

With reference to figures 1 to 3, reference numeral 100 globally denotes a tyre according to a first embodiment of the invention.

Tyre 100 comprises a carcass structure 110 and a crown structure 130, radially overlapped to the carcass structure 110 and in turn comprising at least one belt structure 140 and a tread band 150.

The carcass structure 110 (per se known) comprises at least one carcass ply 111, which is folded outwards at the ends thereof around respective annular reinforcing structures, in particular respective bead cores 112 and annular inserts 113, so as to form beads 114 for mounting tyre 100 on a rim.

The carcass ply 111 is preferably internally coated with a sealing layer 115, or the so-called "liner", essentially consisting of a layer of airtight elastomeric material adapted to ensure the seal of tyre 100 once inflated.

A further layer of elastomeric material (not shown in the figures) generally called "underliner" with features of mechanical resistance to breakout and good chemical features of weldability in vulcanization, may in turn be interposed between the liner and the carcass ply 111 for preventing the escape of the cords of the carcass ply 111 inside the tyre during the shaping step and for ensuring the liner weldability to the same carcass ply.

The belt structure 140 (per se known as well) comprises belt strips, for example three strips 141, 142, 143.

The tread band 150 comprises at least two radially overlapping layers of a band of elastomeric material, in the example shown for example three layers 151, 152, 153, The three layers 151, 152, and 153 have a width equal to the width of the tread band 150 and are extruded from a same band of elastomeric material, hot-deposited in a radially outer position on said belt structure 140.

Preferably, the thickness of each one of layers 151, 152 and 153 is comprised between 0.5 and 2.0 mm, more preferably between 0.8 and 1.5 mm and even more preferably equal to about 1.0 mm.

Layers 151, 152 and 153 are formed by the same band, deposited wound by a number of turns equal to the number of layers, that is, in tyre 100 by three turns on the belt structure 140, as better shown in figure 2.

Finally, tyre 100 exhibits respective sidewalls 116 of elastomeric material on the side surfaces of the carcass structure 110, each extending from one of the side edges of the tread band 150 up to the respective annular reinforcing structure to beads 114.

According to the preferred embodiment, shown in figures 1 to 3, layers 151, 153, 153 have all the same width.

Figure 4 shows a tread band 150' according to a version of the first embodiment of the invention. Tread band 150' is similar to tread band 150, and like that one it comprises three layers 151', 152' and 153', which have each a width equal to tread band 150', but they exhibit a width differing from each other, decreasing in radial direction, from the inside outwards of the tyre: layer 152' is narrower than layer 153' and larger than layer 151'. In this case, the indication that layers 151', 152' and 153' have a width equal to the tread band 150' is to be understood as referred to each position in radial direction: the width of tread band 150' in fact varies as the radial position varies, so that the tread band 150' is larger in the radially inner portion thereof, corresponding to layer 151', narrower in the radially intermediate portion thereof, corresponding to layer 152', and even narrower in the radially outer portion thereof, corresponding to layer 153'.

The different width of layers 151', 152' and 153' may be obtained with a band of elastomeric material in turn having a decreasing width, in a continuous manner or step-wise.

More precisely, the width-wise adjustment of said band may be obtained with different methods.

According to first preferred embodiment, such adjustment is obtained by extrusion from a single die or mouth having adjustable width; said adjustment may in turn be continuous or discontinuous.

As an alternative, it is possible to perform an extrusion by dies or mouths of different widths.

A further preferred method for said adjustment may be performed with a setup of the band by knife trimming.

A different preferred adjustment method may finally be performed by stretching the elastomeric material the band is made of, controlling the latter between the extrusion point and the application point.

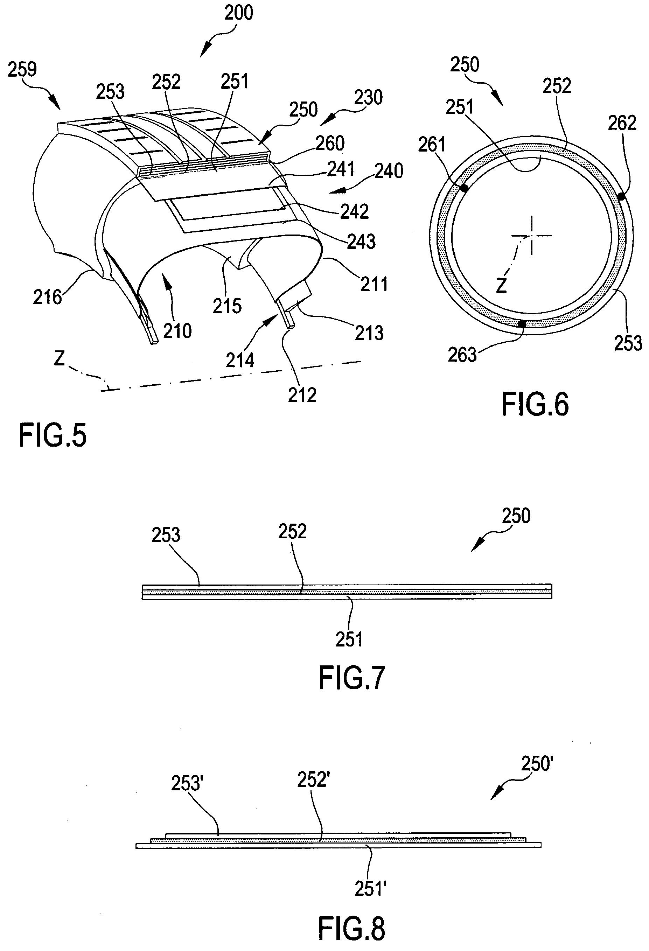

With reference to figures 5 to 7, reference numeral 200 globally denotes a tyre according to a second embodiment of the invention.

Tyre 200, similar to tyre 100, comprises a carcass structure 210 and a crown structure 230, radially overlapped to the carcass structure 210 and in turn comprising at least one belt structure 240 and a tread band 250.

The carcass structure 210 (per se known and equal to the carcass structure 110 of the first embodiment) comprises at least one carcass ply 211, which is folded outwards at the ends thereof around respective annular reinforcing structures, in particular respective bead cores 212 and annular inserts 213, so as to form beads 214 for mounting tyre 200 on a rim.

The carcass ply 211 is preferably internally coated with a sealing layer 215, or the so-called "liner", essentially consisting of a layer of airtight elastomeric material adapted to ensure the seal of tyre 200 once inflated. Also in this case, the presence of a underliner is preferably provided, interposed between liner and carcass ply 211.

The belt structure 240 (per se known as well) comprises belt strips, for example three strips 241, 242, 243.

The tread band 250 comprises at least two radially overlapping layers of a band of elastomeric material, in the example shown for example three layers 251, 252, 253, The three layers 251, 252, and 253 have a width equal to the width of the tread band 250 and are extruded from a same band of elastomeric material, hot-deposited in a radially outer position on said belt structure 240.

Preferably, the thickness of each one of layers 251, 252 and 253 is comprised between 0.5 and 2.0 mm, more preferably between 0.8 and 1.5 mm and even more preferably equal to about 1.0 mm.

Layers 251, 252 and 253 are formed by corresponding band portions, deposited on top of each other and closed each by a respective joint 261, 262, 263; joints 261, 262, 263 are in different angular positions, angularly distributed along 360° relative to the tyre axis Z; in the example shown, therefore, the three joints 254, 255, 256 are arranged at 120° from one another.

Similar to tyre 100, tyre 200 exhibits respective sidewalls 216 of elastomeric material on the side surfaces of the carcass structure 210, each extending from one of the side edges of the tread band 250 up to the respective annular reinforcing structure to beads 214.

According to the preferred embodiment, shown in figures 5 to 7, layers 251, 252, 253 have all the same width.

Figure 8 shows a tread band 250' according to a version of the second embodiment of the invention. Tread band 250' is similar to tread band 250, and like that one it comprises three layers 251', 252' and 253', which have each a width equal to tread band 250', but they exhibit a width differing from each other, decreasing in radial direction, from the inside outwards of the tyre: layer 252' is narrower than layer 253' and larger than layer 251'. In this case, the indication that layers 251', 252' and 253' have a width equal to the tread band 250' is to be understood as referred to each position in radial direction: the width of tread band 250' in fact varies as the radial position varies, so that the tread band 250' is larger in the radially inner portion thereof, corresponding to layer 251', narrower in the radially intermediate portion thereof, corresponding to layer 252', and even narrower in the radially outer portion thereof, corresponding to layer 253'.

The different width of layers 251', 252' and 253' may be obtained with a band of elastomeric material in turn having a decreasing width, in a continuous manner or step-wise.

In said tread bands 150, 150', 250, 250', according to a preferred feature of the invention, the single layers 151-153, 151'-153', 251-253, 251'-253', are all made of the same elastomeric material using any formulation suitable for producing tread bands.

According to another preferred feature, the single layers 151-153 in tread band 150, 151'-153' in tread band 150', 251-253 in tread band 250, 251'-253' in tread band 250', are made of elastomeric materials differing from one another.

According to a preferred embodiment, the hardness of the materials used for producing adjacent layers must differ by at least 4 IRHD at room temperature, measured according to the ISO 48 standard, with hardness between inner layers and outer layers sorted in an increasing or decreasing manner according to the required performance.

Tyres 100 and 200, once built as green tyres, are then moulded and vulcanized so that the desired tread pattern 159, 259 remains steadily impressed therein.

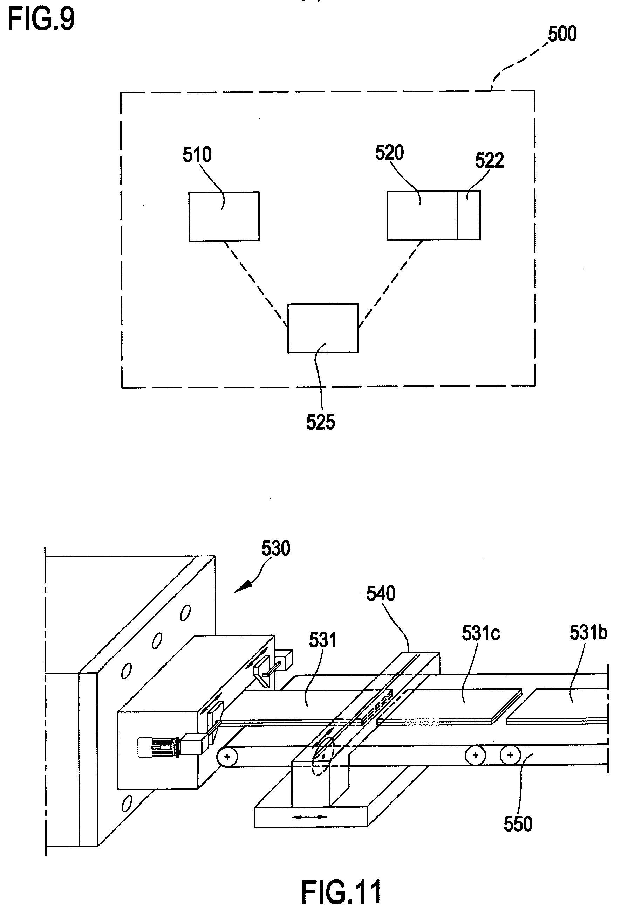

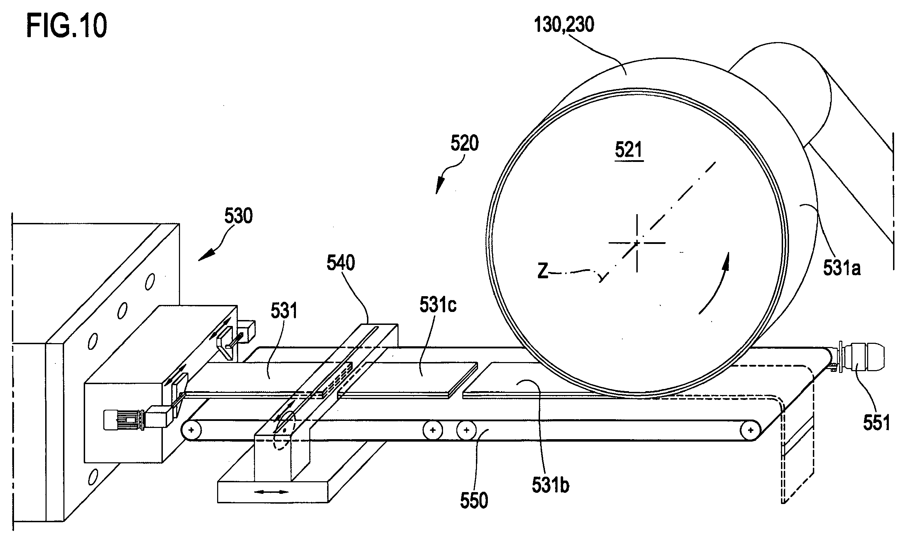

Figures 9 and 10 show a plant 500 according to the fourth aspect of the invention, suitable for carrying out a process according to the first aspect of the invention for building tyres 100 and 200 according to the second aspect of the invention.

Plant 500 comprises at least one workstation 510 for building a carcass structure 110, 210, at least one workstation 520 for building a crown structure 130, 230 comprising at least one belt structure 140, 240 and a tread band 150, 250, and at least one workstation 525 for the association of the carcass structure 110, 210 with the crown structure 130, 230.

The workstation 520 for building of the crown structure 130, 230 comprises: a forming drum 521, for supporting and rotating the crown structure 130, 230 being processed, a device 522 for feeding at least one belt strip 141-143, 241-243 on the forming drum 521 for forming the belt structure 140, 240; a hot-extrusion device 530, for feeding, with heat, an extruded band 531 having a width equal to a predetermined width of the tread band 150, 250 and a thickness smaller than a predetermined thickness of the tread band 150, 250, in a radially outer position on the belt structure 140, 240 supported by the forming drum 521.

Preferably, workstation 520 of plant 500 further comprises a cutting device 540, to cut the hot-extruded band 531.

Preferably, workstation 520 of plant 500 further comprises a transfer device 550, to support and transport the hot-extruded band 530 from the extruder device 530 to the crown structure 130, 230 being processed.

Preferably, the transfer device 550 comprises its own motorised devices 551, to accelerate band 531 supported thereon.

With reference to the building plant 500 illustrated in figures 9 and 10, and to tyres 100 and 200 illustrated in figures 1 to 8, a preferred embodiment of a process for building a tyre according to the invention shall now be described.

Such process provides:
- building the carcass structure 110, 210,
- building a crown structure 130, 230 comprising at least one belt structure 140, 240 and a tread band 150, 250,
- the association of the carcass structure 110, 210 with the crown structure 130, 230.

The building of the crown structure 130, 230 envisages the building of the belt structure 140, 240 on a drum 521 and the deposition of the tread band 150 250 in a position radially outside the belt structure 140, 240.

The deposition of the tread band 150, 250 comprises:
- the provision of a predetermined elastomeric material in a hot-extrusion device 530,
- from said extrusion device 530, the extrusion of a band 531 of elastomeric material having a width equal to the predetermined width of the tread band 150, 250 and a thickness smaller than the predetermined thickness of the tread band 150, 250,
- the hot-deposition of band 531 onto the belt structure 140, 240 in at least two overlapping layers 151-153, 251-253.

Preferably, the process provides guiding of band 531 of elastomeric material towards the belt structure 140, 240.

Preferably, the process provides the cut of band 531 in a predetermined position.

Preferably, the cut takes place during deposition, whilst a first leading portion 531a of band 531 downstream of the cut has already been deposited and a second trailing portion 531 b downstream of the cut is still to be deposited. Preferably, the process further provides guiding of band 531 of elastomeric material towards the belt structure 140, 240 and the cut takes place during the guiding.

Preferably, the cut takes place before the deposition starts and the guiding comprises an acceleration of the band downstream of the cut, after cutting.

Preferably, during the guiding, the process also provides a further cut of band 531 in a predetermined position, with separation from band 531 of a waste portion 531c of predetermined length, and the discard of the waste portion 531c.

Preferably, the guiding comprises the temporary arrangement of band 531 on a transfer device 550, so as to carry out the deposition on the belt structure 140, 240 in a position relatively remote from the extrusion device 530.

In a preferred embodiment, which leads to the building of tyre 100, band 531 is deposited wound by three turns, with formation of the overlapping layers 151-153. In this case, preferably, the process provides the rolling of the deposited band 531, to level off, with heat, an end part thereof.

In an alternative preferred embodiment, which leads to the building of tyre 200, band 531 is deposited wound in single turns, overlapping one another, with formation of the overlapping layers 251-253. In each one of layers 251-253, an own joint 261-263 is formed and the deposition is carried out so that joints 261-263 of the distinct single layers 251-253 are in distinct angular positions, angularly distributed along the circumferential direction of the tyre.

More preferably, the deposition of band 531 provides:
- the deposition of a first portion of band 531 on the belt structure 240, for a first revolution, with formation of the first one 251 of the overlapping layers, and formation of a first joint 261 between a final edge and an initial edge of the first portion;
- the deposition of a second portion of band 531 on the first layer 251 for a second revolution, with formation of the second one 252 of the overlapping layers, and formation of a second joint 262 between a final edge and an initial edge of the second portion;
- the further deposition of a further portion of band 531 of the last layer 252 previously deposited for a further revolution, with formation of a further overlapping layer, and formation of a further joint 263 between a final edge and an initial edge of the further portion.

Finally, it should be noted that thanks to the invention it is possible to obtain tyres wherein the tread band is more regular than in known tyres, thanks to the absence of any joint or to the presence of small sized joints regularly distributed circumferentially along the circumferential direction of the tyre.

Within the scope of the present description and in the following claims, all numerical values indicating amounts, parameters, percentages and the like are to always be deemed as preceded by the term "about", if not otherwise stated. Moreover, all numerical value ranges include all possible combinations of the maximum and minimum numerical values and all possible intermediate ranges, besides those specifically indicated in the text.

It is clear that a man skilled in the art may make further changes and variants to the invention described hereinbefore in order to meet specific and incidental application requirements, changes and variants in any case falling within the scope of protection defined in the following claims.

## Claims

1. Process for building tyres, comprising:
- building of a carcass structure (110; 210),
- building of a crown structure (130; 230) comprising a belt structure (140; 240) and a tread band (150; 150'; 250; 250');
- association of the carcass structure (110; 210) with the crown structure (130; 230);
wherein the building of the crown structure (130; 230) provides building of said belt structure (140; 240) on a drum (521) and deposition of said tread band (150; 150'; 250; 250') in a position radially outside said belt structure (140; 240);
wherein the deposition of said tread band (150; 150'; 250; 250') comprises:
- provision of a predetermined elastomeric material in a hot-extrusion device (530),
- from said extrusion device (530), extrusion of a band (531) of elastomeric material having a width equal to the predetermined width of the tread band (150; 150'; 250; 250') and a thickness smaller than the predetermined thickness of the tread band (150; 150'; 250; 250'),
- hot-deposition of said band (531) onto the belt structure (140; 240) in at least two overlapping layers (151, 152, 153; 151', 152', 153'; 251, 252, 253; 251', 252', 253'),
- cut of said band (531) in a predetermined position, wherein the cut takes place during deposition, whilst a first leading portion (531 a) of the band (531) downstream of the cut has already been deposited and a second trailing portion (531 b) downstream of the cut is still to be deposited.

2. Process according to claim 1, further comprising:
- guiding of said band (531) of elastomeric material towards said belt structure (140; 240).

3. Process according to claim 1, further comprising:
- guiding of said band (531) of elastomeric material towards said belt structure (140; 240), wherein the cut takes place during the guiding.

4. Process according to claim 3, wherein the cut takes place before the deposition starts and the guiding comprises an acceleration of the band (531) downstream of the cut, after cutting.

5. Process according to claim 3, further comprising, during the guiding:
- further cut of said band (531) in a predetermined position, with separation from the band (531) of a waste portion (531 c) of predetermined length,
- discard of the waste portion (531 c).

6. Process according to claim 2, wherein the guiding comprises:
- temporary arrangement of the band (531) on a transfer device (550), so as to carry out the deposition on said belt structure (140; 240) in a position relatively remote from said extrusion device (530).

7. Process according to any one of the previous claims, wherein the thickness of the band (531) is between 0.5 and 2.0 mm.

8. Process according to any one of claims 1 to 7, wherein said at least two layers (151, 152, 153; 251, 252, 253) of the band (531) of elastomeric material all have the same width.

9. Process according to any one of claims 1 to 7, wherein said at least two layers (151', 152', 153'; 251', 252', 253') of the band (531) of elastomeric material have different widths to one another, decreasing in the radial direction, from the inside outwards.

10. Process according to any one of claims 1 to 9, wherein the band (531) is deposited wound at least twice around, with formation of said at least two overlapping layers (151, 152, 153; 151', 152', 153').

11. Process according to claim 10, comprising:
- rolling of the deposited band (531), to level off, with heat, an end part of the deposited band (531).

12. Process according to any one of claims 1 to 9, wherein the band (531) is deposited in single revolutions, on top of one another with formation of at least two overlapping layers (251, 252, 253; 251', 252', 253'), each of said layers having its own joint (261, 262, 263) formed therein.

13. Process according to claim 12, wherein said deposition is carried out so that the joints (261, 262, 263) of the distinct single layers (251, 252, 253; 251', 252', 253') are in distinct angular positions, angularly distributed along the circumferential direction of a tyre being processed.

14. Process according to claim 13, wherein the deposition of the band (531) provides:
- first deposition of a first portion of said band (531) on said belt structure (140; 240) for a first revolution, with formation of a first (251; 251') of said at least two overlapping layers, and formation of a first joint (261) between a final edge and an initial edge of the first portion,
- second deposition of a second portion of said band (531) on the first layer (251; 251') for a second revolution, with formation of a second (252; 252') of said at least two overlapping layers, and formation of a second joint (262) between a final edge and an initial edge of the second portion,
- optionally, one or more further depositions of further portions of said band (531) of the last layer (252; 252') previously deposited for further revolutions, with formation of further overlapping layers (253; 253'), and formation of a further joint (263) between a final edge and an initial edge of each further portion.

15. Process according to claim 13, wherein at least two from said first portion, said second portion, and said optional further portions are made with a different band (531) of elastomeric material.

16. Green tyre comprising:
- a carcass structure,
- a crown structure (130; 230) radially overlapping said carcass structure (110; 210), comprising a belt structure (140; 240) and a tread band (150; 150'; 250; 250'),
wherein the tread band (150; 150'; 250; 250') comprises at least two radially overlapping layers (151, 152, 153; 151', 152', 153'; 251, 252, 253; 251', 252', 253') of a band (531) of elastomeric material having a width equal to the width of the tread band (150; 150'; 250; 250'), extruded and hot-deposited in a radially outer position on said belt structure (140; 240),
wherein the thickness of each of the at least two layers (151, 152, 153; 151', 152', 153'; 251, 252, 253; 251', 252', 253') is between 0.5 and 2.0 mm, and
wherein said at least two layers (151', 152', 153'; 251', 252', 253') of the band of elastomeric material have different widths to one another, decreasing in the radial direction, from the inside outwards.

17. Tyre according to claim 16, wherein said at least two overlapping layers (151, 152, 153; 151', 152', 153') are formed from a band (531) deposited wound at least twice around.

18. Tyre according to any one of claims 16 or 17, wherein said at least two overlapping layers (251, 252, 253; 251', 252', 253') are formed from corresponding band portions (531), deposited on top of one another and each closed by a joint (261, 262, 263).

19. Tyre according to claim 18, wherein the joints (261, 262, 263) are in distinct angular positions, angularly distributed along the circumferential direction of the tyre.

20. Tyre according to claim 18, wherein said two band portions (531) are made from different elastomeric material.

21. Tyre according to any one of claims 16 to 20, moulded and vulcanized.

22. Plant for building a tyre, comprising:
- at least one workstation (510) for building of a carcass structure (110; 210);
- at least one workstation (520) for building of a crown structure comprising a belt structure (140; 240) and a tread band (150; 150'; 250; 250');
- at least one workstation (525) for the association of the carcass structure (110; 210) with the crown structure (130; 230);
wherein the workstation (520) for building of the crown structure (130; 230) comprises:
- a forming drum (521), for supporting and rotating the crown structure (130; 230) being processed,
- a device (522) for feeding at least one belt strip (141, 142, 143; 241, 242, 243) onto said forming drum (521) to form said belt structure (140; 240);
- a hot-extrusion device (530), for feeding, with heat, an extruded band (531) having a width equal to a predetermined width of the tread band (150; 150'; 250; 250') and a thickness smaller than a predetermined thickness of the tread band (150; 150'; 250; 250'), in a radially outer position on the belt structure (140; 240) supported by the forming drum (521);
- a cutting device (540), to cut said hot-extruded band (531) so that the cut takes place during deposition, whilst a first leading portion (531 a) of the band (531) downstream of the cut has already been deposited and a second trailing portion (531 b) downstream of the cut is still to be deposited.

23. Plant according to claim 22, further comprising a transfer device (550), to support and transport the hot-extruded band (531) from the extruder device (530) to the crown structure (130; 230).

24. Plant according to claim 23, wherein the transfer device (550) comprises its own motorised devices (551), to accelerate the supported band.

## Patentansprüche

1. Verfahren zur Herstellung von Reifen, das die folgenden Schritte umfasst:
- Herstellen einer Karkassenstruktur (110; 210),
- Herstellen einer Zenithstruktur (130; 230) umfassend eine Gürtelstruktur (140; 240) und einen Laufflächenring (150; 150; 250; 250');
- Zuordnen der Karkassenstruktur (110; 210) und der Zenithstruktur (130; 230);
wobei das Herstellen der Zenithstruktur (130; 230) das Herstellen der Gürtelstruktur (140; 240) an einer Trommel (521) und das Ablegen des Laufflächenrings (150; 150'; 250; 250') in einer Position radial außerhalb der Gürtelstruktur (140; 240) vorsieht;
wobei das Ablegen des Laufflächenrings (150; 150'; 250; 250') Folgendes umfasst:
- Bereitstellen eines vorbestimmten Elastomermaterials in einer Heißextrusionsvorrichtung (530),
- Extrudieren eines Streifens (531) aus Elastomermaterial mit einer Breite, die der vorbestimmten Breite des Laufflächenrings (150; 150'; 250; 250') entspricht, und einer Dicke, die geringer ist als die vorbestimmte Dicke des Laufflächenrings (150, 150'; 250; 250') aus der Extrusionsvorrichtung (530),
- Heißablegen des Streifens (531) auf die Gürtelstruktur (140; 240) in zumindest zwei überlappenden Lagen (151, 152, 153; 151', 152', 153'; 251, 252, 253; 251', 252', 253'),
- Abschneiden des Streifens (531) an einer vorbestimmten Stelle, wobei der Schnitt während der Ablage erfolgt, während ein erster führender Abschnitt (531a) des Streifens (531) stromabwärts des Schnitts bereits abgelegt wurde und ein zweiter nachlaufender Abschnitt (531b) stromabwärts des Schnitts noch abgelegt werden muss.

2. Verfahren nach Anspruch 1, des Weiteren umfassend folgende Schritte:
- Führen des Streifens (531) aus Elastomermaterial zu der Gürtelstruktur (140; 240).

3. Verfahren nach Anspruch 1, des Weiteren umfassend folgende Schritte:
- Führen des Streifens (531) aus Elastomermaterial zu der Gürtelstruktur (140; 240), wobei der Schnitt während des Führens erfolgt.

4. Verfahren nach Anspruch 3, wobei der Schnitt erfolgt, bevor das Ablegen beginnt, und das Führen ein Beschleunigen des Streifens (531) stromabwärts des Schnitts nach dem Schneiden umfasst.

5. Verfahren nach Anspruch 3, das während des Führens des Weiteren die folgenden Schritte umfasst:
- weiteres Abschneiden des Streifens (531) an einer vorbestimmten Stelle, wobei der Streifen (531) von einem Abfallabschnitt (531c) vorbestimmter Länge getrennt wird,
- Entsorgen des Abfallabschnitts (531c).

6. Verfahren nach Anspruch 2, wobei das Führen umfasst:
- temporäres Anordnen des Streifens (531) auf einer Transfereinrichtung (550), um das Ablegen auf der Gürtelstruktur (140; 240) in einer Position relativ entfernt von der Extrusionsvorrichtung (530) auszuführen.

7. Verfahren nach einem der vorhergehenden Ansprüche, wobei die Dicke des Streifens (531) zwischen 0,5 und 2,0 mm beträgt.

8. Verfahren nach einem der Ansprüche 1 bis 7, wobei die zumindest zwei Lagen (151, 152, 153; 251, 252, 253) des Streifens (531) aus Elastomermaterial alle dieselbe Breite aufweisen.

9. Verfahren nach einem der Ansprüche 1 bis 7, wobei die zumindest zwei Lagen (151', 152', 153'; 251', 252', 253') des Streifens (531) aus Elastomermaterial sich voneinander unterscheidende Breiten aufweisen, die in der radialen Richtung von innen nach außen abnehmen.

10. Verfahren nach einem der Ansprüche 1 bis 9, wobei der Streifen (531) durch zumindest zweimaliges Umwickeln unter Ausbildung der zumindest zwei überlappenden Lagen (151, 152, 153; 151', 152', 153') abgelegt wird.

11. Verfahren nach Anspruch 10, des Weiteren umfassend die folgenden Schritte:
- Walzen des abgelegten Streifens (531) um unter Erwärmung einen Endabschnitt des abgelegten Streifens (531) zu nivellieren.

12. Verfahren nach einem der Ansprüche 1 bis 9, wobei der Streifen (531) in einzelnen Wicklungen übereinander unter Ausbildung der zumindest zwei überlappenden Lagen (251, 252, 253; 251', 252', 253') abgelegt wird, wobei jede der Lagen ihren eigenen, darin ausgebildeten Stoß (261, 262, 263) aufweist.

13. Verfahren nach Anspruch 12, wobei das Ablegen so ausgeführt wird, dass die Stöße (261, 262, 263) der unterschiedlichen einzelnen Lagen (251, 252, 253; 251', 252', 253') sich in klar geschiedenen Winkelstellungen befinden, die winkelförmig über die Umfangsrichtung eines zu verarbeitenden Reifens verteilt sind.

14. Verfahren nach Anspruch 13, wobei das Ablegen des Streifens (531) Folgendes vorsieht:
- erstens das Ablegen eines ersten Abschnitts des Streifens (531) auf die Gürtelstruktur (140; 240) für eine erste Wicklung, wobei eine erste (251; 251') der zumindest zwei überlappenden Lagern gebildet wird, und ein erster Stoß (261) zwischen einem Endrand und einem Anfangsrand des ersten Abschnitts gebildet wird,
- zweitens das Ablegen eines zweiten Abschnitts des Streifens (531) auf der ersten Lage (251; 251') für eine zweite Wicklung, wobei eine zweite (252; 252') der zumindest zwei überlappenden Lagen gebildet wird, und ein zweiter Stoß (262) zwischen einem Endrand und einem Anfangsrand des zweiten Abschnitts gebildet wird,
- optional ein- oder mehrmaliges weiteres Ablegen weiterer Abschnitte des Streifens (531) der letzten Lage (252; 252'), die zuvor abgelegt wurde, für weitere Umwicklungen, wobei weitere überlappende Lagen (253; 253') gebildet werden, und ein weiterer Stoß (263) zwischen einem Endrand und einem Anfangsrand jedes weiteren Abschnitts gebildet wird.

15. Verfahren nach Anspruch 13, wobei zumindest zwei von erstem Abschnitt, zweitem Abschnitt und optionalen weiteren Abschnitten mit einem unterschiedlichen Streifen (531) aus Elastomermaterial hergestellt werden.

16. Rohreifen, der Folgendes umfasst:
- eine Karkassenstruktur,
- eine Zenithstruktur (130; 230), die die Karkassenstruktur (110; 210) radial überlappt und eine Gürtelstruktur (140; 240) und einen Laufflächenring (150; 150'; 250; 250') umfasst, wobei der Laufflächenring (150; 150'; 250; 250') zumindest zwei radial überlappende Lagen (151, 152, 153; 151', 152', 153'; 251, 252, 253; 251', 252', 253') eines Streifens (531) aus Elastomermaterial umfasst, die eine Breite gleich der Breite des Laufflächenrings (150; 150' 250; 250') aufweisen, und extrudiert und heiß an einer radial äußeren Stelle an der Gürtelstruktur (140; 240) abgelegt sind,
wobei die Dicke jeder der zumindest zwei Lagen (151, 152, 153; 151', 152', 153'; 251, 252, 253; 251', 252', 253') zwischen 0,5 und 2,0 mm beträgt, und
wobei die zumindest zwei Lagen (151', 152', 153'; 251', 252', 253') des Streifens aus Elastomermaterial sich voneinander unterscheidende Breiten aufweisen, die in der radialen Richtung von innen nach außen abnehmen.

17. Reifen nach Anspruch 16, wobei die zumindest zwei überlappenden Lagen (151, 152, 153; 151', 152', 153') aus einem Streifen (531) gebildet sind, der zumindest zweimal herumgewickelt abgelegt ist.

18. Reifen nach einem der Ansprüche 16 oder 17, wobei die zumindest zwei überlappenden Lagen (251, 252, 253; 251', 252', 253') aus entsprechenden Streifenabschnitten (531) gebildet sind, die übereinander abgelegt sind und jeweils durch einen Stoß (261, 262, 263) geschlossen sind.

19. Reifen nach Anspruch 18, wobei sich die Stöße (261, 262, 263) in deutlich geschiedenen Winkelstellungen um die umlaufende Richtung des Reifens verteilt befinden.

20. Reifen nach Anspruch 18, wobei die zwei Streifenabschnitte (531) aus unterschiedlichem Elastomermaterial hergestellt sind.

21. Reifen nach einem der Ansprüche 16 bis 20, der geformt und vulkanisiert ist.

22. Anlage zur Herstellung eines Reifens, die Folgendes umfasst:
- zumindest eine Arbeitsstation (510) zur Herstellung einer Karkassenstruktur (110; 210);
- zumindest eine Arbeitsstation (520) zur Herstellung einer Zenithstruktur umfassend eine Gürtelstruktur (140; 240) und einen Laufflächenring (150; 150'; 250; 250');
- zumindest eine Arbeitsstation (525) zur Zuordnung der Karkassenstruktur (110; 210) und der Zenithstruktur (130; 230);
wobei die Arbeitsstation (520) zur Herstellung der Zenithstruktur (130; 230) Folgendes umfasst:
- eine Formungstrommel (521) zum Tragen und Drehen der zu verarbeitenden Zenithstruktur (130; 230),
- eine Vorrichtung (522) zum Zuführen zumindest eines Gürtelstreifens (141, 142, 143; 241, 242, 243) an die Formungstrommel (521), um die Gürtelstruktur (140; 240) zu bilden;
- eine Heißextrusionsvorrichtung (530) zum Zuführen, unter Erwärmung, eines extrudierten Streifens (531) mit einer Breite, die gleich der vorbestimmten Breite des Laufflächenrings (150; 150'; 250; 250') ist, und einer Dicke, die geringer ist als die vorbestimmte Dicke des Laufflächenrings (150; 150'; 250; 250'), in einer radial äußeren Position auf die Gürtelstruktur (140; 240), die von der Formungstrommel (521) getragen wird;
- eine Schneidvorrichtung (540) zum Abschneiden des heißextrudierten Streifens (531), so dass der Schnitt während des Ablegens erfolgt, während ein erster führender Abschnitt (531a) des Streifens (531) stromabwärts des Schnitts bereits abgelegt wurde, und ein zweiter nachlaufender Abschnitt (531b) stromabwärts des Schnitts noch abgelegt werden muss.

23. Anlage nach Anspruch 22, des Weiteren umfassend eine Transfereinrichtung (550) zum Tragen und Transportieren der heißextrudierten Streifens (531) von der Extrudiervorrichtung (530) zu der Zenithstruktur (130; 230).

24. Anlage nach Anspruch 23, wobei die Transfereinrichtung (550) ihre eigenen motorisierten Einrichtungen (551) umfasst, um den getragenen Streifen zu beschleunigen.

## Revendications

1. Procédé de construction de pneus, comprenant le fait :
- de construire une structure de carcasse (110 ; 210),
- de construire une structure de sommet (130 ; 230) comprenant une structure de ceinture (140 ; 240) et une bande de roulement (150 ; 150' ; 250 ; 250') ;
- d'associer la structure de carcasse (110 ; 210) à la structure de sommet (130 ; 230) ;
où la construction de la structure de sommet (130 ; 230) prévoit la construction de ladite structure de ceinture (140 ; 240) sur un tambour (521) et le dépôt de ladite bande de roulement (150 ; 150' ; 250 ; 250') dans une position radialement à l'extérieur de ladite structure de ceinture (140 ; 240) ;
où le dépôt de ladite bande de roulement (150 ; 150' ; 250 ; 250') comprend le fait :
- de fournir un matériau élastomère prédéterminé dans un dispositif d'extrusion à chaud (530),
- d'extruder, à partir dudit dispositif d'extrusion (530), une bande (531) de matériau élastomère ayant une largeur égale à la largeur prédéterminée de la bande de roulement (150 ; 150' ; 250 ; 250') et une épaisseur inférieure à l'épaisseur prédéterminée de la bande de roulement (150 ; 150' ; 250 ; 250'),
- de déposer à chaud ladite bande (531) sur la structure de ceinture (140 ; 240) dans au moins deux couches superposées (151, 152, 153 ; 151', 152', 153' ; 251, 252, 253 ; 251', 252', 253'),
- de couper ladite bande (531) dans une position prédéterminée, où la coupe a lieu pendant le dépôt, même si une première partie avant (531a) de la bande (531) en aval de la coupure a déjà été déposé et une deuxième partie arrière (531b) en aval de la coupure doit encore être déposée.

2. Procédé selon la revendication 1, comprenant en outre le fait :
- de guider ladite bande (531) de matériau élastomère vers ladite structure de ceinture (140 ; 240).

3. Procédé selon la revendication 1, comprenant en outre le fait :
- de guider ladite bande (531) de matériau élastomère vers ladite structure de ceinture (140 ; 240), où la coupe a lieu durant le guidage.

4. Procédé selon la revendication 3, dans lequel la coupe a lieu avant que le dépôt ne commence et le guidage comprend une accélération de la bande (531) en aval de la coupure, après la coupe.

5. Procédé selon la revendication 3, comprenant en outre, pendant le guidage, le fait :
- de couper davantage ladite bande (531) dans une position prédéterminée, avec séparation d'une partie déchet (531c) d'une longueur prédéterminée de la bande (531),
- de jeter la partie déchet (531c).

6. Procédé selon la revendication 2, dans lequel le guidage comprend le fait :
- d'agencer temporairement la bande (531) sur un dispositif de transfert (550), de manière à effectuer le dépôt sur ladite structure de ceinture (140 ; 240) dans une position relativement éloignée dudit dispositif d'extrusion (530).

7. Procédé selon l'une quelconque des revendications précédentes, dans lequel l'épaisseur de la bande (531) est comprise entre 0,5 et 2,0 mm.

8. Procédé selon l'une quelconque des revendications 1 à 7, dans lequel lesdites au moins deux couches (151, 152, 153 ; 251, 252, 253) de la bande (531) de matériau élastomère ont toutes la même largeur.

9. Procédé selon l'une quelconque des revendications 1 à 7, dans lequel lesdites au moins deux couches (151', 152', 153' ; 251', 252', 253') de la bande (531) de matériau élastomère ont des largeurs différentes l'une de l'autre, diminuant dans la direction radiale, de l'intérieur vers l'extérieur.

10. Procédé selon l'une quelconque des revendications 1 à 9, dans lequel la bande (531) est déposée de manière à être enroulée au moins deux fois, avec formation desdites au moins deux couches superposées (151, 152, 153 ; 151', 152', 153').

11. Procédé selon la revendication 10, comprenant le fait :
- de laminer la bande (531) déposée, pour niveler, avec la chaleur, une partie d'extrémité de la bande (531) déposée.

12. Procédé selon l'une quelconque des revendications 1 à 9, dans lequel la bande (531) est déposée en tours simples, les uns sur les autres avec formation d'au moins deux couches superposées (251, 252, 253 ; 251', 252', 253'), chacune desdites couches ayant son propre joint (261, 262, 263) formé dedans.

13. Procédé selon la revendication 12, dans lequel ledit dépôt est effectué de telle sorte que les joints (261, 262, 263) des couches individuelles distinctes (251, 252, 253 ; 251', 252', 253') soient dans des positions angulaires distinctes, réparties de manière angulaire le long de la direction circonférentielle d'un pneu en cours de traitement.

14. Procédé selon la revendication 13, dans lequel le dépôt de la bande (531) fournit :
- un premier dépôt d'une première partie de ladite bande (531) sur ladite structure de ceinture (140 ; 240) pour un premier tour, avec formation d'une première couche (251 ; 251') desdites au moins deux couches superposées, et formation d'un premier joint (261) entre un bord final et un bord initial de la première partie,
- un deuxième dépôt de la deuxième partie de ladite bande (531) sur la première couche (251 ; 251') pour un deuxième tour, avec formation d'une deuxième couche (252 ; 252') desdites au moins deux couches superposées, et formation d'un deuxième joint (262) entre un bord final et un bord initial de la deuxième partie,
- Facultativement, un ou plusieurs dépôt(s) supplémentaire(s) de parties supplémentaires de ladite bande (531) de la dernière couche (252 ; 252') préalablement déposées pour des tours supplémentaires, avec formation de couches superposées supplémentaires (253 ; 253'), et formation d'un joint supplémentaire (263) entre un bord final et un bord initial de chaque partie supplémentaire.

15. Procédé selon la revendication 13, dans lequel au moins deux parties parmi ladite première partie, ladite deuxième partie, et lesdites parties facultatives supplémentaires sont réalisées avec une bande différente (531) de matériau élastomère.

16. Pneu cru comprenant :
- une structure de carcasse,
- une structure de sommet (130 ; 230) chevauchant radialement ladite structure de carcasse (110 ; 210), comprenant une structure de ceinture (140 ; 240) et une bande de roulement (150 ; 150' ; 250 ; 250'),
où la bande de roulement (150 ; 150' ; 250 ; 250') comprend au moins deux couches superposées radialement (151, 152, 153 ; 151', 152', 153' ; 251, 252, 253 ; 251', 252', 253') d'une bande (531) de matériau élastomère ayant une largeur égale à la largeur de la bande de roulement (150 ; 150' ; 250 ; 250'), extrudées et déposées à chaud dans une position radialement externe sur ladite structure de ceinture ( 140 ; 240),
où l'épaisseur de chacune desdites au moins deux couches (151, 152, 153 ; 151', 152', 153' ; 251, 252, 253 ; 251', 252', 253') est comprise entre 0,5 et 2 mm, et
où lesdites au moins deux couches (151', 152', 153' ; 251', 252', 253') de la bande de matériau élastomère ont des largeurs différentes les unes des autres, diminuant dans la direction radiale, de l'intérieur vers l'extérieur.

17. Pneu selon la revendication 16, dans lequel lesdites au moins deux couches superposées (151, 152, 153 ; 151', 152', 153') sont formées à partir d'une bande (531) déposée enroulée au moins deux fois.

18. Pneu selon l'une quelconque des revendications 16 ou 17, dans lequel lesdites au moins deux couches superposées (251, 252, 253 ; 251', 252', 253') sont formées à partir de parties de bande correspondantes (531), déposées les unes sur les autres et chacune fermée par un joint (261, 262, 263).

19. Pneu selon la revendication 18, dans lequel les joints (261, 262, 263) sont dans des positions angulaires distinctes, réparties de manière angulaire le long de la direction circonférentielle du pneu.

20. Pneu selon la revendication 18, dans lequel lesdites deux parties de bande (531) sont réalisées à partir de différents matériaux élastomères.

21. Pneu selon l'une quelconque des revendications 16 à 20, moulé et vulcanisé.

22. Installation pour la construction d'un pneu, comprenant:
- au moins un poste de travail (510) pour la construction d'une structure de carcasse (110 ; 210) ;
- au moins un poste de travail (520) pour la construction d'une structure de sommet comprenant une structure de ceinture (140 ; 240) et une bande de roulement (150 ; 150' ; 250 ; 250') ;
- au moins un poste de travail (525) pour l'association de la structure de carcasse (110 ; 210) avec la structure de sommet (130 ; 230) ;
où le poste de travail (520) pour la construction de la structure de sommet (130 ; 230) comprend :
- un tambour de formation (521), pour supporter et faire tourner la structure de sommet (130 ; 230) en cours de traitement,
- un dispositif (522) pour alimenter au moins une bande de ceinture (141, 142, 143 ; 241, 242, 243) sur ledit tambour de formage (521) pour former ladite structure de ceinture (140 ; 240) ;
- un dispositif d'extrusion à chaud (530), pour alimenter, avec la chaleur, une bande extrudée (531) ayant une largeur égale à une largeur prédéterminée de la bande de roulement (150 ; 150' ; 250 ; 250') et une épaisseur inférieure à une épaisseur prédéterminée de la bande de roulement (150 ; 150' ; 250 ; 250'), dans une position radialement externe sur la structure de ceinture (140 ; 240) supportée par le tambour de formage (521) ;
- un dispositif de coupe (540), pour couper ladite bande extrudée à chaud (531), de sorte que la coupe ait lieu pendant le dépôt, même si une première partie avant (531a) de la bande (531) en aval de la coupure a déjà été déposée et une deuxième partie arrière (531b) en aval de la coupure doit encore être déposée.

23. Installation selon la revendication 22, comprenant en outre un dispositif de transfert (550), pour supporter et transporter la bande extrudée à chaud (531) à partir du dispositif d'extrusion (530) vers la structure de sommet (130 ; 230).

24. Installation selon la revendication 23, dans lequel le dispositif de transfert (550) comprend ses propres dispositifs motorisés (551), pour accélérer la bande supportée.
